# EUROPEAN PATENT APPLICATION

(11) **EP 1 643 346 A2**
(43) Date of publication of application: **05.04.2006**
(21) Application number: 05019901.7
(22) Date of filing: 13.09.2005
(51) Int. Cl.: G06F 1/18

(54) **Cover structure of desktop PC case**

(30) Priority: 30.09.2004 CN 200410083342
(71) Applicant: ASUSTeK Computer Inc., Peitou, Taipei City (TW)
(72) Inventor: Sun, Chung-Shih, Peitou Taipei (TW); Tsai, Wen Cheng, Peitou Taipei (TW)
(74) Representative: TER MEER - STEINMEISTER & PARTNER GbR

(57) **Abstract**

A cover structure of a desktop PC case is applied to a shell, which has a cover and an opening corresponding to the cover. The cover structure includes a first link, a first pivotal connecting component and a springiness element. One end of the first link has a first connecting portion, and the other end thereof has a sliding connecting portion. The sliding connecting portion is slidingly connected with the cover. The first pivotal connecting component is pivotal connected with the first connecting portion and disposed on an upper edge of the opening of the shell. The springiness element is connected with the first pivotal connecting component and the first link, and provides a springiness force to open the cover.

## Description

### BACKGROUND OF THE INVENTION

### Field of Invention

The invention relates to a cover structure, and more particularly to a cover structure of a desktop PC case capable of enabling the lifting of a cover of a desktop PC case.

### Related Art

Computers are popular in the modem society, and people can do word processing, play games, and communicate with the network by using the computers. Thus, the computers have become essential products in homes and offices. The typical desktop computer usually needs an optical disk drive, a floppy disk drive or a recorder, which is typically disposed on a front side of the computer host to facilitate the operation of the user.

Recently, the manufacturer adds a cover to the host in order to make the feature of the computer host more beautiful and further protect the device such as the optical disk drive. The available cover structures in the market are classified into a laterally opened type and a sliding type. The cover could be closed when the device such as the optical disk drive or floppy disk drive is not used, and be opened when the device is to be used.

The laterally opened type cover structure, as shown in FIG. 1A, has a cover added to the exposed device portion for the optical disk drive, the floppy disk drive and the like, and a side of the cover is connected with the case such that the cover can be rotated. When the device such as the optical disk drive is to be used, the cover can be opened about the lateral side.

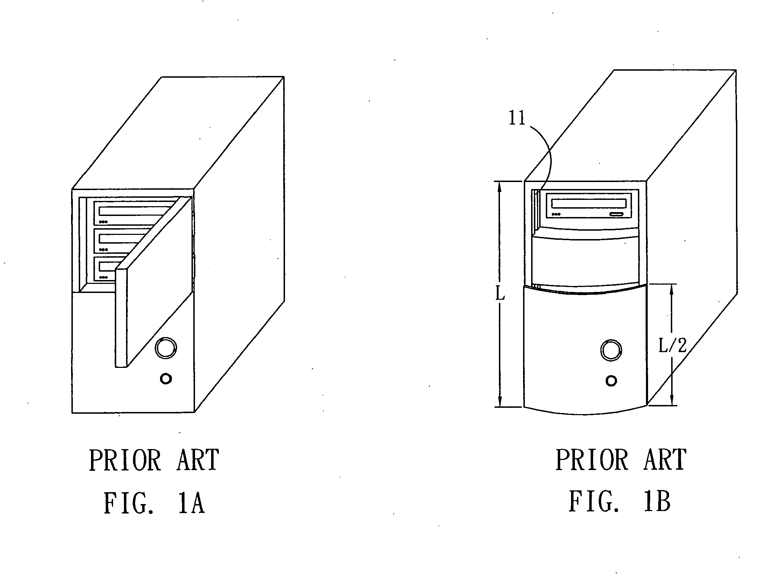

The sliding type cover structure, as shown in FIG. 1B, has a sliding track 11 formed on a lateral side of the case, and the cover is attached to the sliding track 11 such that the cover can be opened or closed by the sliding track 11.

However, either the laterally opened type cover or the sliding type cover has some drawbacks. As for the laterally opened type cover, no obstructer can be placed within the radial open range of the cover, and otherwise the cover cannot be completely opened. In addition, when the tray of the optical disk drive moves out if the cover is not completely opened, the tray collides with the cover, and either the cover or the optical disk drive may be damaged.

Although the sliding type cover does not have the above-mentioned drawbacks, another problem to be described in the following exists. If the height of the host is L and the cover needs to be completely opened, a space length of L/2 is needed to receive the opened cover. So, the remained space length for receiving the apparatus such as the optical disk drive is only L/2. In this case, if the user needs to use more apparatuses and the required height exceeds L/2, this type of host cannot be used.

Thus, a utility and beautiful cover structure is needed to solve the above-mentioned problems.

### SUMMARY OF THE INVENTION

In view of the foregoing, the invention provides a cover structure of a desktop PC case utilizing the principle of links.

To achieve the above, a cover structure of a desktop PC case of the invention is applied to a shell having a cover and an opening corresponding to the cover. The cover structure includes, a first link, a first pivotal connecting component and a springiness element. One end of the first link has a first connecting portion and the other end of the first link has a sliding connecting portion slidingly connected with the cover. The first pivotal connecting component is pivotally connected with the first connecting portion of the first link, and the first pivotal connecting component is disposed on an upper edge of the opening of the shell. The springiness element is connected with the first pivotal connecting component and the first link to provide an elastic force to open the cover.

As mentioned above, the cover structure of the desktop PC case of the invention utilizes the link in conjunction with the pivotal connection and the sliding connection, so the structure is utility and good in appearance.

### BRIEF DESCRIPTION OF THE DRAWINGS

The invention will become more fully understood from the detailed description given herein below illustration only, and thus is not limitative of the present invention, and wherein:

FIGS. 1A and 1B are schematic illustrations showing a conventional cover structure of the desktop PC case, wherein FIG. 1A shows a laterally opened type cover structure and FIG. 1B shows a sliding type cover structure;

FIG. 2 is an exploded view showing a cover structure of a desktop PC case according to a preferred embodiment of the invention;

FIGS. 3A and 3B are side views showing the cover structure of the desktop PC case according to the preferred embodiment of the invention; and

FIGS. 4A to 4D are schematic illustrations showing the cover structure of the desktop PC case according to the preferred embodiment of the invention, wherein FIG. 4A shows a closed state of the cover, FIGS. 4B and 4C show an opened state of the cover, and FIG. 4D is a schematic illustration showing that a third link is added.

### DETAILED DESCRIPTION OF THE INVENTION

The cover structure of a desktop PC case according to the preferred embodiment of the invention will be described with reference to the accompanying drawings, wherein the same symbols denote the same elements.

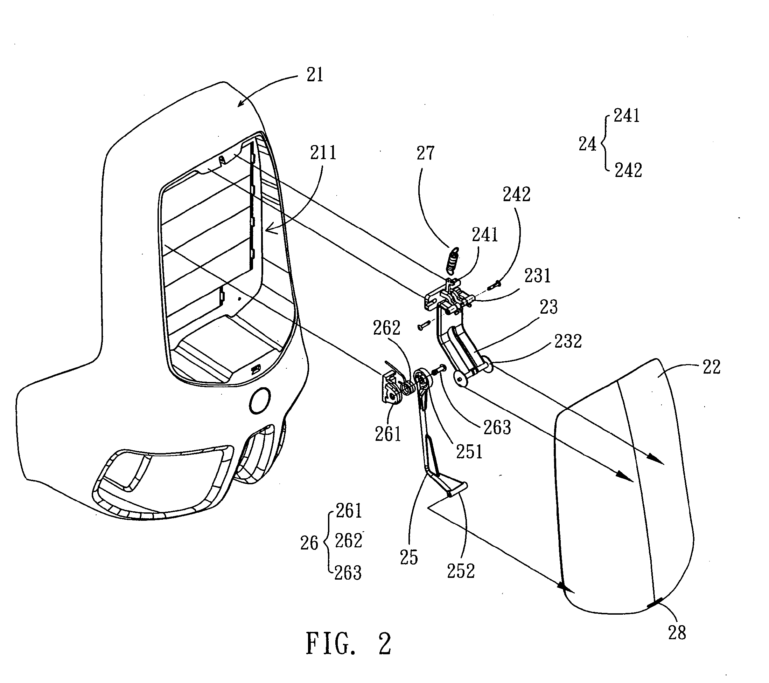

As shown in FIG. 2, a cover structure of a desktop PC case according to the preferred embodiment of the invention is applied to a shell 21, which has a cover 22 and an opening 211 corresponding to the cover 22. The cover structure of the desktop PC case includes a first link 23, a first pivotal connecting component 24, a second link 25, a second pivotal connecting component 26, and a springiness element 27.

In this embodiment, one end of the first link 23 has a first connecting portion 231 and the other end thereof has a sliding connecting portion 232 slidingly connected with the cover 22.

The first pivotal connecting component 24 is pivotally connected with the first connecting portion 231 of the first link 23. The first pivotal connecting component 24 is disposed on an upper edge of the opening 211 of the shell 21. In this embodiment, the first pivotal connecting component 24 includes a first pivotal connecting element 241 and a first pivot 242. The first pivotal connecting component 24 is disposed on the upper edge of the opening 211 of the shell 21 by the first pivotal connecting element 241, and the first pivot 242 passes through the first pivotal connecting element 241 and the first connecting portion 231 such that the first link 23 can be pivotally rotated. When the first link 23 is pivotally rotated upwards about the first pivotal connecting component 24, the cover 22 can be lifted up.

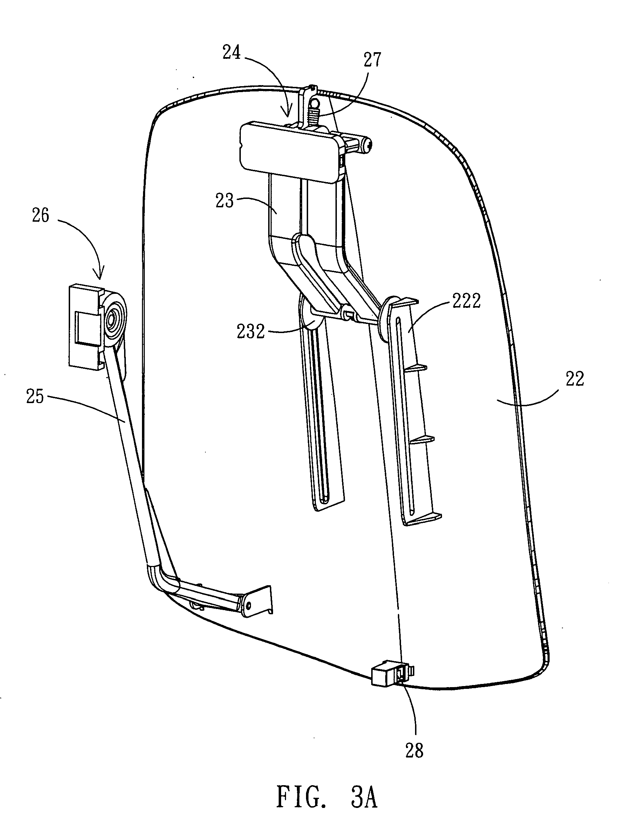

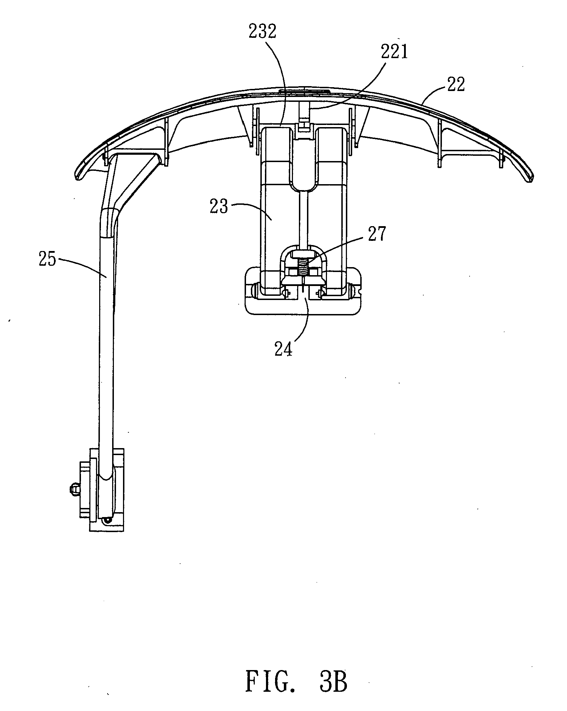

FIG. 3A is a schematic illustration showing the structure when the cover 22 and the shell 21 are closed, and FIG. 3B is a schematic illustration showing a side surface of the structure when the cover 22 is opened.

The springiness element 27 is connected with the first pivotal connecting component 24 and the first link 23, as shown in FIG. 3B. The springiness element 27 provides a springiness force to open the cover 22. The springiness element 27 enables the opened cover 22 to easily bounce upwards, and prevents the cover 22 that is opened upwards from sliding downwards easily. In this embodiment, the springiness element 27 is a drawspring.

One end of the second link 25 has a second connecting portion 251 and the other end of the second link 25 has a pivotal connecting portion 252. In this embodiment, the pivotal connecting portion 252 is pivotally mounted to the side edge of the cover 22, as shown in FIG. 3A.

The second pivotal connecting component 26 is pivotally connected with the second connecting portion 251 of the second link 25, and is disposed on the side edge of the opening 211 of the shell 21. In this embodiment, the second pivotal connecting component 26 includes a second pivotal connecting element 261, a damping element 262 and a second pivot 263. The second pivotal connecting component 26 is disposed on the side edge of the opening 211 of the shell 21 by the second pivotal connecting element 261. The damping element 262 is disposed between the first pivotal connecting element 241 and the second connecting portion 251 to provide another springiness force to help the springiness element 27 to open the cover 22. The second pivot 263 passes through the second pivotal connecting element 261, the damping element 262 and the second connecting portion 251 such that the second link 25 can be pivotally rotated.

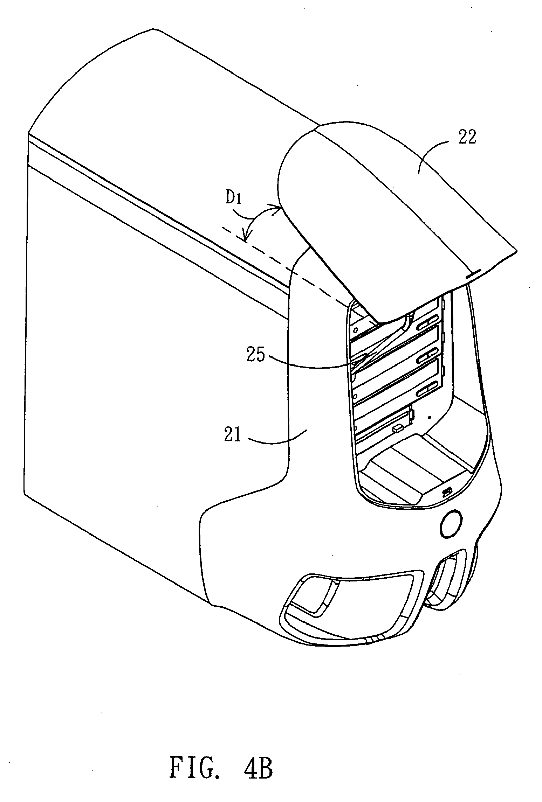

Herein, as shown in FIG. 4B, the cover structure of the desktop PC case according to the preferred embodiment of the invention mainly takes the first pivotal connecting component 24 as a pivot, and utilizes the first link 23 to pivotally rotate the cover 22 upwards to a first position D₁. In addition, the second pivotal connecting component 26 may serve as an auxiliary pivot and the second link 25 drives the cover 22 to pivotally rotate upwards such that the action of the first link 23 may be enhanced. In addition, referring to FIG. 3B, the cover 22 further includes a restricting element 221, which is adjacent to the sliding connecting portion 232 and in contact with the sliding connecting portion 232. The restricting element 221 restricts the cover 22 such that the cover 22 cannot be closed before it is opened to the first position D₁.

In this embodiment, the cover 22 further has a track 222, as shown in FIG. 3A. The track 222 is slidingly connected with the sliding connecting portion 232 of the first link 23. In this preferred embodiment, a roller is disposed on the sliding connecting portion 232 such that the first link 23 is attached to the cover 22 and the roller can slide on the track 222.

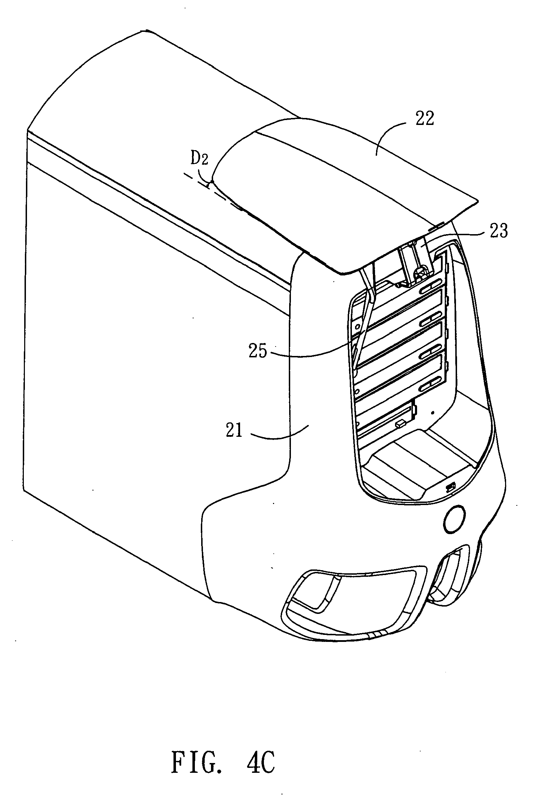

Herein, as shown in FIG. 4C, the cover structure of the desktop PC case according to the preferred embodiment of the invention can be slidingly connected with the track 222 by the sliding connecting portion 232 such that the cover 22 can be further pushed forwards to a second position D₂.

In addition, an attaching portion 28 for attaching the cover 22 to the shell 21 is further disposed on the cover 22, as shown in FIG. 2. In this embodiment, the attaching portion 28 is attached to the shell 21 by way of engagement using a door lock as the engagement assembly. The door lock is the attachment assembly that frequently appears in the market. During the attachment, the attaching portion automatically bounces away as the door lock is slightly pressed. Then, the door lock may be slightly pressed again to attach the cover to the shell.

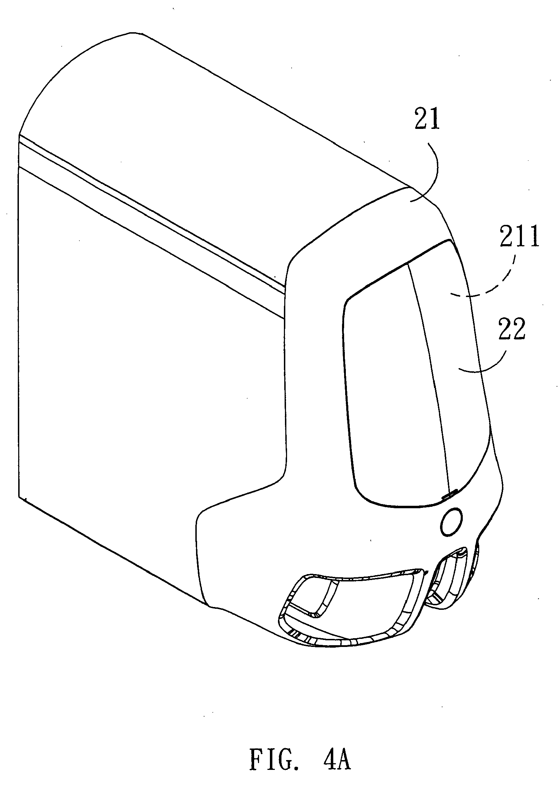

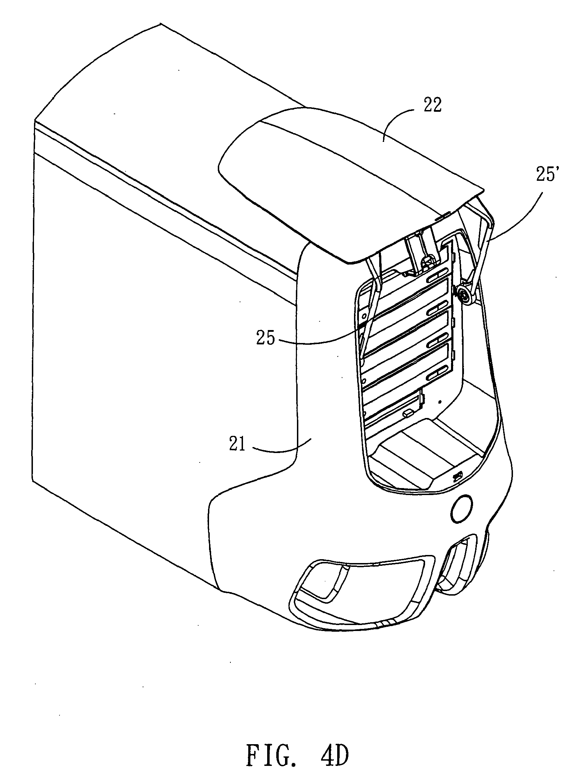

In summary, FIG. 4A shows that the shell 21 is attached to the cover 22, and the cover 22 is disposed on a position corresponding to the opening 211. When the cover 22 is opened, the first link 23 and the second link 25 support and push up the cover 22. With the aids of the springiness element 27 and the damping element 262 that provide the springiness forces, the cover 22 can automatically bounce upwards and open to the first position D₁, as shown in FIG. 4B, after the attaching portion 28 is slightly pressed. Then, the cover 22 is pushed back to the second position D₂, as shown in FIG. 4C. In addition, a third link 25' may be added to reinforce the structure and stabilize the opening process, as shown in FIG. 4D. Herein, the cover structure of the desktop PC case of the invention has a beautiful appearance and does not occupy too much space. In addition, the front side of the host can be completely used by the disposed external device such as an optical disk drive.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A cover structure of a desktop PC case applied to a shell having a cover and an opening corresponding to the cover, the cover structure of the desktop PC case comprising:
a first link, wherein one end of the first link has a first connecting portion and the other end of the first link has a sliding connecting portion slidingly connected with the cover;
a first pivotal connecting component pivotally connected with the first connecting portion of the first link and disposed on an upper edge of the opening of the shell; and
a springiness element connected with the first pivotal connecting component and the first link to provide a springiness force to open the cover.

2. The cover structure of the desktop PC case according to claim 1, further comprising:
an attaching portion disposed on the cover for attaching the cover to the shell.

3. The cover structure of the desktop PC case according to claim 2, wherein the attaching portion is attached to the shell by a way of engagement.

4. The cover structure of the desktop PC case according to claim 3, wherein the attaching portion is a door lock.

5. The cover structure of the desktop PC case according to claim 1, wherein the first pivotal connecting component comprises:
a first pivotal connecting element disposed on an upper edge of the opening of the shell, wherein the first pivotal connecting component is disposed on the upper edge of the opening of the shell by the first pivotal connecting element; and
a first pivot passing through the first pivotal connecting element and the first connecting portion.

6. The cover structure of the desktop PC case according to claim 1, wherein the cover further comprises:
a restricting element disposed adjacent to the sliding connecting portion for restricting a moving direction of the cover.

7. The cover structure of the desktop PC case according to claim 1, wherein the springiness element is a drawspring.

8. The cover structure of the desktop PC case according to claim 1, wherein the cover further comprises a track slidingly connected with the sliding connecting portion of the first link.

9. A cover structure of a desktop PC case applied to a shell having a cover and an opening corresponding to the cover, the cover structure of the desktop PC case comprising:
a first link, wherein one end of the first link has a first connecting portion and the other end of the first link has a sliding connecting portion slidingly connected with the cover;
a first pivotal connecting component pivotally connected with the first connecting portion of the first link and disposed on an upper edge of the opening of the shell;
a springiness element connected with the first pivotal connecting component and the first link to provide a springiness force to open the cover; and
a restricting element disposed adjacent to the sliding connecting portion for restricting a moving direction of the cover.

10. The cover structure of the desktop PC case according to claim 9, further comprising:
an attaching portion disposed on the cover for attaching the cover to the shell.

11. The cover structure of the desktop PC case according to claim 10, wherein the attaching portion is attached to the shell by a way of engagement.

12. The cover structure of the desktop PC case according to claim 11, wherein the attaching portion is a door lock.

13. The cover structure of the desktop PC case according to claim 9, wherein the first pivotal connecting component comprises:
a first pivotal connecting element disposed on an upper edge of the opening of the shell, wherein the first pivotal connecting component is disposed on the upper edge of the opening of the shell by the first pivotal connecting element; and
a first pivot passing through the first pivotal connecting element and the first connecting portion.

14. The cover structure of the desktop PC case according to claim 9, wherein the springiness element is a drawspring.

15. The cover structure of the desktop PC case according to claim 9, wherein the cover further comprises a track slidingly connected with the sliding connecting portion of the first link.

16. A cover structure of a desktop PC case applied to a shell having a cover and an opening corresponding to the cover, the cover structure of the desktop PC case comprising:
a first link, wherein one end of the first link has a first connecting portion and the other end of the first link has a sliding connecting portion slidingly connected with the cover;
a first pivotal connecting component pivotally connected with the first connecting portion of the first link and disposed on an upper edge of the opening of the shell;
a second link, wherein one end of the second link has a second connecting portion and the other end of the second link has a pivotal connecting portion pivotal mounted to a side edge of the cover,
a second pivotal connecting component pivotal connected with the second connecting portion of the second link and disposed on a side edge of the opening of the shell; and
a springiness element connected with the first pivotal connecting component and the first link to provide a springiness force to open the cover.

17. The cover structure of the desktop PC case according to claim 16, further comprising:
an attaching portion disposed on the cover for attaching the cover to the shell.

18. The cover structure of the desktop PC case according to claim 17, wherein the attaching portion is attached to the shell by a way of engagement.

19. The cover structure of the desktop PC case according to claim 18, wherein the attaching portion is a door lock.

20. The cover structure of the desktop PC case according to claim 16, wherein the first pivotal connecting component comprises:
a first pivotal connecting element disposed on an upper edge of the opening of the shell, wherein the firstpivotal connecting component is disposed on the upper edge of the opening of the shell by the first pivotal connecting element; and
a first pivot passing through the first pivotal connecting element and the first connecting portion.

21. The cover structure of the desktop PC case according to claim 16, wherein the second pivotal connecting component comprises:
a second pivotal connecting element disposed on the side edge of the opening of the shell, wherein the second pivotal connecting component is disposed on the side edge of the opening of the shell by the second pivotal connecting element;
a damping element for providing another springiness force to help the springiness element to open the cover; and
a second pivot passing through the second pivotal connecting element, the damping element and the second connecting portion.

22. The cover structure of the desktop PC case according to claim 21, wherein the damping element comprises a spring.

23. The cover structure of the desktop PC case according to claim 16, wherein the cover further comprises:
a restricting element disposed adjacent to the sliding connecting portion for restricting a moving direction of the cover.

24. The cover structure of the desktop PC case according to claim 16, wherein the springiness element is a drawspring.

25. The cover structure of the desktop PC case according to claim 16, wherein the cover further comprises a track slidingly connected with the sliding connecting portion of the first link.
